# EUROPÄISCHE PATENTSCHRIFT

(11) **EP 2 196 876 B1**
(45) Veröffentlichungstag und Bekanntmachung des Hinweises auf die Patenterteilung: **27.03.2013**
(21) Anmeldenummer: 09173581.1
(22) Anmeldetag: 21.10.2009
(51) Int. Cl.: G05B 19/042, G01M 17/007, F02D 35/00, B60W 50/00

(54) **Verfahren und Steuergerätepalette zum Vorrüsten eines Steuergeräteverbundes**
Method and control device palette for preliminary setup of a control device train
Procédé et plaque d'appareil de guidage pour équiper au préalable un ensemble d'appareils de commande

(30) Priorität: 15.12.2008 AT 72208 U
(43) Veröffentlichungstag der Anmeldung: 16.06.2010
(73) Patentinhaber: AVL List GmbH, 8020 Graz (AT)
(72) Erfinder: Schyr, Christian, 69120 Heidelberg (DE); Gschweitl, Kurt, 8063 Eggersdorf (AT); Pfister, Felix, 8010 Graz (AT)
(74) Vertreter: Weiss, Christian

(56) Entgegenhaltungen:
- EP-A1- 1 484 591
- HANSELMANN H: "Hardware-in-the-loop simulation testing and its integration into a CACSD toolset" COMPUTER-AIDED CONTROL SYSTEM DESIGN, 1996., PROCEEDINGS OF THE 1996 I EEE INTERNATIONAL SYMPOSIUM ON DEARBORN, MI, USA 15-18 SEPT. 1996, NEW YORK, NY, USA,IEEE, US LNKD- DOI:10.1109/CACSD.1996.555253, 15. September 1996 (1996-09-15), Seiten 152-156, XP010198781 ISBN: 978-0-7803-3032-0

## Beschreibung

Die gegenständliche Erfindung betrifft ein Verfahren zum Vorrüsten eines Steuergeräteverbundes aus einer Anzahl von einzelnen Steuergeräten auf einem Steuergeräte-Rüstplatz, ein Verfahren zum Rüsten eines Prüfstandes, sowie eine zugehörige Steuergerätepalette.

Der realitätsnahe Test von Prüflingen auf Leistungsprüfständen, z.B. ein Antriebsstrang auf einem Antriebsstrangprüfstand oder ein Verbrennungsmotor auf einem Motorprüfstand, erfordert fehlerfrei arbeitende Steuergeräte, wie z.B. ECU (Engine Control Unit) oder TCU (Transmission Control Unit). Diese Problematik wird bei alternativen Antriebskonzepten, wie z.B. bei Elektrohybrid oder Brennstoffzelle, die den Einsatz komplexer und vernetzter Steuergeräte, wie z.B. ECU (Engine Control Unit), TCU (Transmission Control Unit), HCU (Hybrid Control Unit), BCU (Battery Control Unit) und VCU (Vehicle Dynamics Control Unit), erfordern, noch vergrößert.

In den frühen Phasen des Entwicklungsprozesses sind aber einerseits noch nicht alle Steuergeräte für den Prüfstandsaufbau in serienreifen Zustand verfügbar, sodass das ordnungsgemäße Funktionieren, auch im Verbund mit anderen Steuergeräten, nicht sichergestellt ist. Auf dadurch bedingte Fehler kommt man aber häufig erst nachdem die Prüfkonfiguration am Prüfstand komplett aufgebaut worden ist und ein Prüfablauf gestartet wird. Solche Fehler bedingen eine unerwünschte lange Stillstandszeit des Prüfstandes durch eine schwierige und langwierige Fehlersuche und Fehlerbehebung. Andererseits müssen die Steuergeräte am Prüfstand auch im Verbund aufgebaut werden und ordnungsgemäß an die jeweiligen zugehörigen physikalischen Systeme angeschlossen werden. So sind zum Beispiel an einem Antriebsstrangprüfstand für Hybridantriebe die Steuergeräte für das Batterie- und Energiemanagement und die Fahrdynamikregelung einerseits fehlerfrei an die Motor- und Getriebesteuergeräte anzubinden und andererseits auch an reale physikalische Systeme, wie z.B. der Batterieeinheit oder dem Bremssystem, um realistische Prüfläufe durchführen zu können. Diese physikalischen Systeme sind am Prüfstand aber oftmals nicht verfügbar, weshalb am Prüfstand entsprechende Vorkehrungen zu treffen sind, um diese fehlenden physikalischen Systeme zu simulieren. Der bisher übliche Aufbau und Funktionstest dieses Steuergeräteverbundes in Verbindung mit den Simulationen der realen physikalischen Systeme direkt auf dem Leistungsprüfstand erfordert jedoch einen hohen zeitlichen und personellen Aufwand und erzwingt damit eine erhebliche Stillstandszeit des Prüfstandes. Ein moderner Prüfstand, in der Regel in einem Prüffeld aus einer Vielzahl von Prüfständen, kann aber nur dann effizient betrieben werden, wenn die Rüstzeiten entsprechend kurz gegenüber den tatsächlichen Testzeiten gehalten werden können. Lange Stillstandszeiten sind dabei äußerst unerwünscht und für den Prüfstandsbetreiber teuer.

Ein bekanntes Konzept zur Effizienzsteigerung von Leistungsprüfständen ist die Verlagerung der Rüstarbeiten vom Prüfstand auf einen speziell ausgestatteten Rüstplatz, wie z.B. in der EP 1 484 591 A1 beschrieben. Dabei wird der Prüfling samt benötigter Messtechnik mechanisch auf einer Transportpalette aufgebaut, elektrisch verkabelt und getestet. Die fertig aufgebaute Transportpalette wird dann in den Prüfstand gebracht, wo der Prüfling mit dem Dyno und eventuell benötigten Versorgungsmedienzuleitungen (z.B. Kühlwasser) bzw. mit Ableitungen (z.B. für Abgas) verbunden werden kann. Die gesamte Messtechnik wird über einen geeigneten Datenbus mit der Prüfstandssteuerung verbunden, wonach der Prüfstand bereits einsatzbereit ist. Die Rüstzeit direkt im Prüfstand kann damit sehr kurz gehalten werden. Diese bekannten Palettenkonzepte sind bisher aber nur für die Vorrüstung von mechanischen Komponenten und zugehöriger Messtechnik im Einsatz und nehmen keine Rücksicht auf eventuell benötigte Steuergeräte bzw. auf einen Steuergeräteverbund.

Es ist daher eine Aufgabe der gegenständlichen Erfindung, zur Effizienzsteigerung des Prüfstandsbetriebs die Rüstzeiten im Zusammenhang mit dem Aufbau und der Inbetriebnahme der benötigten Steuergeräte bzw. eines Steuergeräteverbundes im Prüfstand zu reduzieren.

Diese Aufgabe wird erfindungsgemäß dadurch gelöst, dass der Steuergeräteverbund am Steuergeräte-Rüstplatz auf einer Steuergerätepalette aufgebaut und die einzelnen Steuergeräte untereinander verbunden werden und zumindest ein Steuergerät zusätzlich mit einem auf der Steuergerätepalette angeordneten Simulationsrechner verbunden wird, wobei in den Simulationsrechner Simulationsmodelle zur Simulation von realen physikalischen Systemen geladen werden und zumindest das eine Steuergerät Daten mit einem zugeordneten Simulationsmodell austauscht. Dies ermöglicht den Aufbau, die Inbetriebnahme sowie den Funktionstest der Steuergeräte und des Steuergeräteverbundes parallel und unabhängig zum laufenden Betrieb am Prüfstand. Damit wird ein effizienter Prüfstandseinsatz mit entsprechenden Kosteneinsparungen ermöglicht.

Besonders vorteilhaft wird die Funktion zumindest eines Steuergerätes und/oder die Kommunikation zwischen zumindest zwei Steuergeräten und/oder die Funktion des Steuergeräteverbundes am Steuergeräte-Rüstplatz getestet. Damit kann sichergestellt werden, dass der Steuergeräteverbund fehlerfrei und einsatzbereit ist, wenn dieser am Prüfstand mit dem Prüfling verbunden wird. Damit kann die für Prüfläufe am Prüfstand nutzbare Prüfstandszeit weiter erhöht werden. Ebenso kann vorteilhaft ein am Prüfstand durchzuführender Prüflauf vorab getestet werden, indem ein Prüflauf und dafür benötigte weitere Simulationsmodelle in den Simulationsrechner geladen werden und der Prüflauf unter Einbindung des Steuergeräteverbundes und der weiteren Simulationsmodelle simuliert wird. Damit wird nicht nur die Funktion der Steuergeräte getestet, sondern auch das Zusammenspielen der Steuergeräte während eines ganzen Prüflaufes. Damit zusammenhängende Fehler am Prüfstand können somit vorab entdeckt und ausgeräumt werden, was die für Prüfläufe am Prüfstand verfügbare Zeit weiter erhöht.

Ein Prüfstand mit einem Prüfling und einer Antriebs- und Belastungsmaschine kann damit einfach, schnell und sicher gerüstet werden, indem der Steuergeräteverbund in einem Steuergeräte-Rüstplatz auf einer Steuergerätepalette vorgerüstet wird, anschließend die vorgerüstete Steuergerätepalette zum Prüfling gebracht wird und der Prüfling mit zumindest einem zugehörigen Steuergerät der Steuergerätepalette verbunden wird, wobei die Verbindung dieses Steuergerätes mit dem Simulationsrechner gelöst wird. Da der Steuergeräteverbund vorab getestet werden kann, wird sichergestellt, dass der Steuergeräteverbund am Prüfstand funktioniert und der geplante Prüflauf fehlerfrei abläuft. Die Prüfstandszeit kann so bestmöglich für Prüfläufe ausgenutzt werden.

Eine erfindungsgemäße Steuergerätepalette zur Aufnahme eines Steuergeräteverbundes aus einer Anzahl von einzelnen Steuergeräten, ist **dadurch gekennzeichnet, dass** auf der Steuergerätepalette der Steuergeräteverbund aus den einzelnen Steuergeräten aufbaubar ist, wobei die einzelnen Steuergeräte untereinander verbunden sind und ein Simulationsrechner vorgesehen ist, in den Simulationsmodelle ladbar sind, wobei zumindest ein Steuergerät zusätzlich mit dem Simulationsrechner verbunden ist und über diese zusätzliche Verbindung Daten zwischen diesem Steuergerät und einem zugeordneten Simulationsmodell austauschbar sind. Die Steuergerätepalette kann als eigener Teil einfach und schnell bewegt werden und lässt sich am Prüftand einfach einbinden und mit dem Prüfling verbinden. Durch den auf der Steuergerätepalette angeordneten Simulationsrechner kann die Steuergerätepalette sehr flexibel eingesetzt werden. Das ermöglicht auch physisch noch nicht verfügbare Steuergeräte, also sehr früh im Entwicklungsprozess, einzusetzen und im Verbund mit anderen Steuergeräten zu testen. Dazu kann ein Steuergerät als ein im Simulationsrechner aufendes Steuergerätemodell implementiert sein.

Die gegenständliche Erfindung wird nachfolgend anhand der schematischen, beispielhaften, nicht einschränkenden und vorteilhafte Ausgestaltungen zeigenden Figuren 1 bis 5 beschrieben. Dabei zeigt
Fig. 1 und 2 eine erfindungsgemäße Steuergerätepalette,
Fig. 3 die Verwendung einer Steuergerätepalette in einem Prüfstand und
Fig. 4 und 5 den Rüstvorgang einer Steuergerätepalette bzw. eines Prüfstandes.

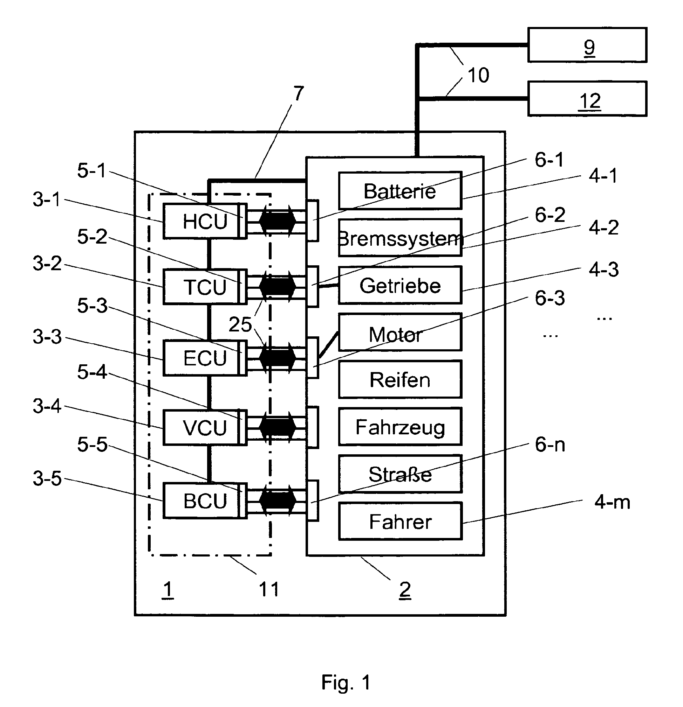

Fig. 1 zeigt eine Steuergerätepalette 1, auf der verschiedene Steuergeräte 3-1 bis 3-5, die für die Durchführung eines Prüflaufes für einen Prüfling auf einem Leistungsprüfstand benötigt werden, aufgebaut sind. Diese Steuergeräte 3-1 bis 3-5 werden auf der Steuergerätepalette 1 so aufgebaut und miteinander verschaltet, wie sie im realen Fahrzeug am Prüfling vorhanden wären und benötigt werden. Die Steuergeräte 3-1 bis 3-5 sind hier über einen Datenbus 7, wie z.B. CAN oder FlexRay, miteinander verbunden, so wie sie auch im Fahrzeug am Prüfling verbunden wären, und können über den Datenbus 7 Daten untereinander austauschen. Die Steuergeräte 3-1 bis 3-5 haben Steuergeräteschnittstellen 5-1 bis 5-5, über die die Steuergeräte 3-1 bis 3-5 über entsprechende Stecker und Verkabelung im realen Fahrzeug mit den realen physikalischen Systemen, z.B. einem Bremssystem, Sensoren an den Rädern, einer Batterie, etc., verbunden wären und darüber Daten mit diesen realen Systemen austauschen würden. An einer TCU (Transmission Control Unit) ist z.B. an der Steuergeräteschnittstelle 3-2 ein Kabelbaum angeschlossen, der in einem realen Fahrzeug mit verschiedenen Sensoren und Aktuatoren am Antriebsstrang bzw. Getriebe des Fahrzeuges verbunden wäre.

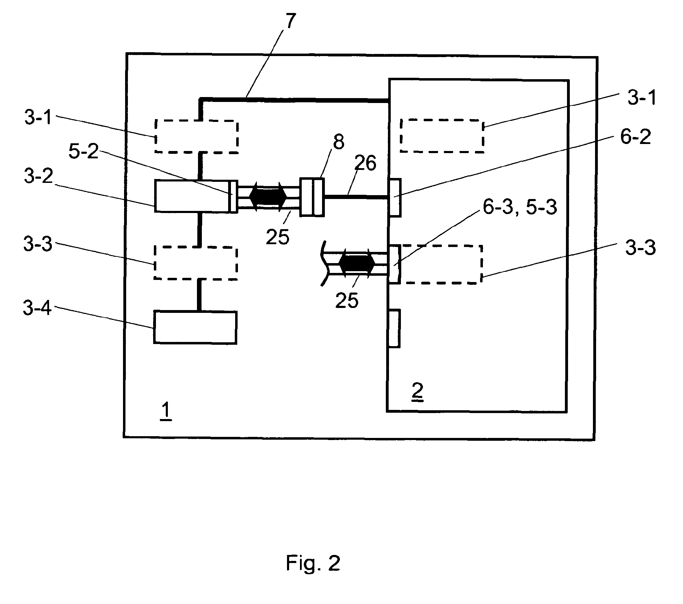

Weiters ist auf der Steuergerätepalette 1 ein Simulationsrechner 2, wie z.B. ein PC, ein DSP oder ein Mikroprozessor, angeordnet. Der Simulationsrechner 2 ist ebenfalls am Datenbus 7 angeschlossen und kann darüber Daten mit den Steuergeräten 3-1 bis 3-5 austauschen. Weiters sind am Simulationsrechner 2 Schnittstellen 6-1 bis 6-n angeordnet, die zum Anschluss von verschiedenen Steuergeräten 3-1 bis 3-5 vorgesehen sind. Diese Schnittstellen 6-1 bis 6-n können passend zu den Steckern des realen, mit den Steuergeräten 3-1 bis 3-5 verbundenen Kabelbaums ausgeführt sein, oder es kann auch ein Adapterstecker 8 vorgesehen sein (wie in Fig. 2 gezeigt), an dem der Kabelbaum angeschlossen wird und vom Adapterstecker 8 zum Simulationsrechner 2 ein standardisiertes Kabel 26 geführt wird, womit auch die Schnittstellen 6-1 bis 6-n standardisiert ausgeführt sein können.

Auf dem Simulationsrechner 2 können verschiedene Simulationsmodelle 4-1 bis 4-m geladen werden, entweder aus einem lokalen Speicher oder aus einer übergeordneten Datenmanagementeinheit 9 oder einem Automatisierungssystem 12, die über ein Datennetzwerk 10 mit dem Simulationsrechner 2 verbunden sein können. Durch die Simulationsmodelle 4-1 bis 4-m werden einerseits physikalische Systeme simuliert, wie z.B. ein Getriebe, ein Verbrennungsmotor, eine Batterie, ein Bremssystem, Sensoren oder Aktuatoren, etc., andererseits aber auch physikalische Systeme, die für den Prüfablauf benötigt werden, wie z.B. ein Straßenverlauf (Steigungen, Gefälle, Kurven, etc.) oder ein Fahrer (Beschleunigen, Verzögern, Schalten, Lenken, etc.). Die Simulationsmodelle 4-1 bis 4-m werden auf dem Simulationsrechner 2 geladen, den Bedürfnissen entsprechend konfiguriert und parametrisiert.

Ein Steuergerät 3-1 bis 3-5 ist im Wesentlichen nichts anders als eine Softwareapplikation mit einem Dateninput und einem Datenoutput. Ein Steuergerät 3-1 bis 3-5 muss daher auf der Steuergerätepalette 1 nicht zwingend physisch aufgebaut werden, sondern könnte auch als Steuergerätemodell auf dem Simulationsrechner 2 implementiert sein, wie in Fig. 2 z.B. für das Steuergerät 3-1 strichliert angedeutet. Gleichfalls könnte auch ein Steuergerät, das am Prüfstand am Prüfling angeschlossen werden soll nur als Steuergerätemodell am Simulationsrechner implementiert sein, wobei die Verbindung zwischen Simulationsrechner 2 und einem solchen simulierten Steuergerät dann intern im Simulationsrechner 2 realisiert werden kann. In diesem Fall kann die Schnittstelle am Simulationsrechner 2 gleichzeitig die Steuergeräteschnittstelle 5-3 sein, an der der Kabelbaum 25 angeschlossen wird, wie z.B. in Fig. 2 für das Steuergerät 3-3 gezeigt. Die Verbindung solcher simulierter Steuergeräte untereinander kann dann ebenfalls intern im Simulationsrechner (zwischen den einzelnen Softwaremodulen) oder aber auch über den Datenbus 7 (ein Softwaremodul sendet Daten über den Datenbus 7, was von einem anderen Softwaremodul empfangen wird) erfolgen. Ebenso muss nicht jedes Steuergerät über eine eigene Steuergeräteschnittstelle mit dem Simulationsrechner 2 verbunden sein, z.B. wenn es für einen ordnungsgemäßen Betrieb keine simulierten Daten benötigt, sondern es ist auch denkbar, dass ein Steuergerät nur mit einem oder mehrere anderen Steuergerät(en) kommuniziert, z.B. über den Datenbus 7, wie z.B. in Fig. 2 für das Steuergerät 3-4 angedeutet.

Die derart vorgerüstete Steuergerätepalette bzw. der aufgebaute Steuergeräteverbund 11 kann nun auch vorab im Rüstbereich getestet werden. Dazu werden alle benötigten Simulationsmodelle 4 in den Simulationsrechner 2 geladen. Damit können Funktionstests der einzelnen Steuergeräte 3 durchgeführt werden. Dazu können z.B. bestimmte Testroutinen durchlaufen werden, in denen die Reaktionen der Steuergeräte 3 auf bestimmte Inputs überprüft werden. Außerdem kann dabei auch überprüft werden, ob die Steuergeräte 3 ordnungsgemäß und fehlerfrei verkabelt sind und untereinander ordnungsgemäß kommunizieren. Aber es können auch die am Prüfstand vorgesehenen Prüfläufe vorgetestet werden. Dazu kann ein vorgesehener Prüflauf und dafür benötigte weitere Simulationsmodelle z.B. von der Datenmanagementeinheit 9 oder vom Automatisierungssystem 12 auf den Steuerrechner 2 geladen werden. Die Simulationsmodelle 4 können nun auch durch die Vorgaben des Prüflaufs parametrisiert und konfiguriert werden. Anschließend kann der Prüflauf mit dem Steuergeräteverbund 11 durchlaufen werden, wodurch eventuelle Fehler bereits auf dem Vorrüstplatz (und nicht erst im Prüfstand) entdeckt und behoben werden können. Der Prüfstand 30 kann in der Zwischenzeit für andere Prüfläufe verwendet werden.

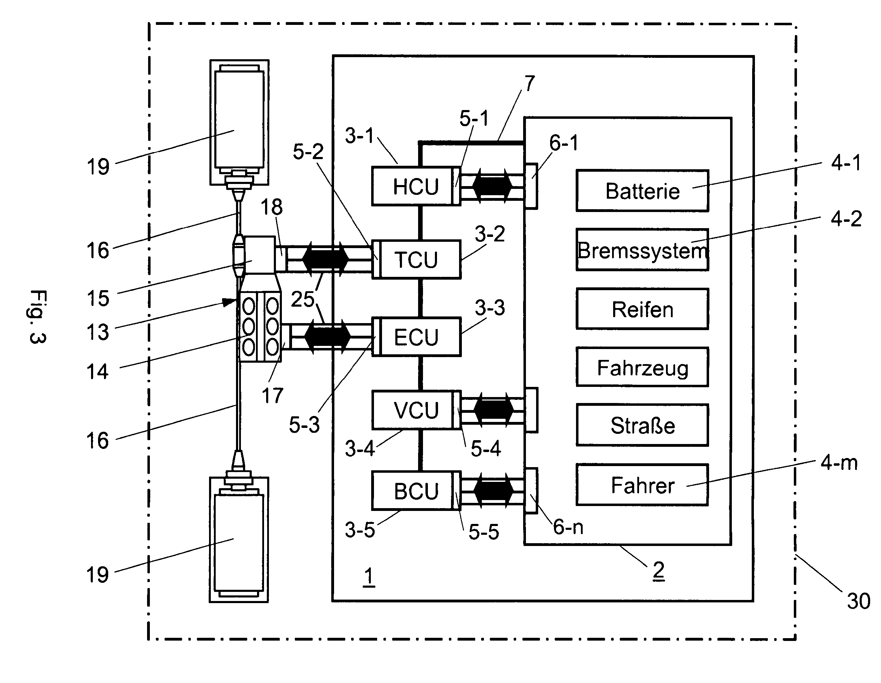

Eine solcherart vorgerüstete und getestete Steuergerätepalette 1 wird in den Prüfstand 30 gebracht, in dem ein Prüfling 13, hier z.B. ein Antriebsstrang eines Hybrid-Fahrzeugs aus einem Verbrennungsmotor 14 und einem Getriebe 15, angeordnet ist, der über Antriebswellen 16 mit einer Antriebs- und Belastungsmaschine 19, hier zwei Antriebs- und Belastungsmaschinen 19, verbunden ist, wie in Fig. 3 dargestellt. Am Prüfling 13 sind Schnittstellen 17, 18 vorgesehen, über die die zugehörigen Steuergeräte 3-2, 3-3 über den vorgesehenen Kabelbaum an den Steuergeräteschnittstellen 5-2, 5-3 angeschlossen werden können. Die am Steuergeräte-Rüstplatz vorhandene Verbindung der Steuergeräte 3-2, 3-3 mit dem Simulationsrechner 2 wird dabei gelöst, da diese Steuergeräte 3-2, 3-3 am Prüfstand die benötigten Messwerte, Signale, etc. mit den am Prüfstand 30 vorhandenen realen physikalischen Systemen austauschen. Die restlichen Steuergeräte 3-1, 3-4 und 3-5 werden nicht direkt mit dem Prüfling verbunden, sondern dienen dem ordnungsgemäßen Funktionieren des Steuergeräteverbundes 11. Die benötigten Daten (Input, Output) für diese Steuergeräte 3-1, 3-4, 3-5 werden dabei von den auf dem Simulationsrechner 2 laufenden Simulationsmodellen 6-1 bis 6-m geliefert. Die Kommunikation zwischen den einzelnen Steuergeräten 3-1 bis 3-5 erfolgt hier über den Datenbus 7.

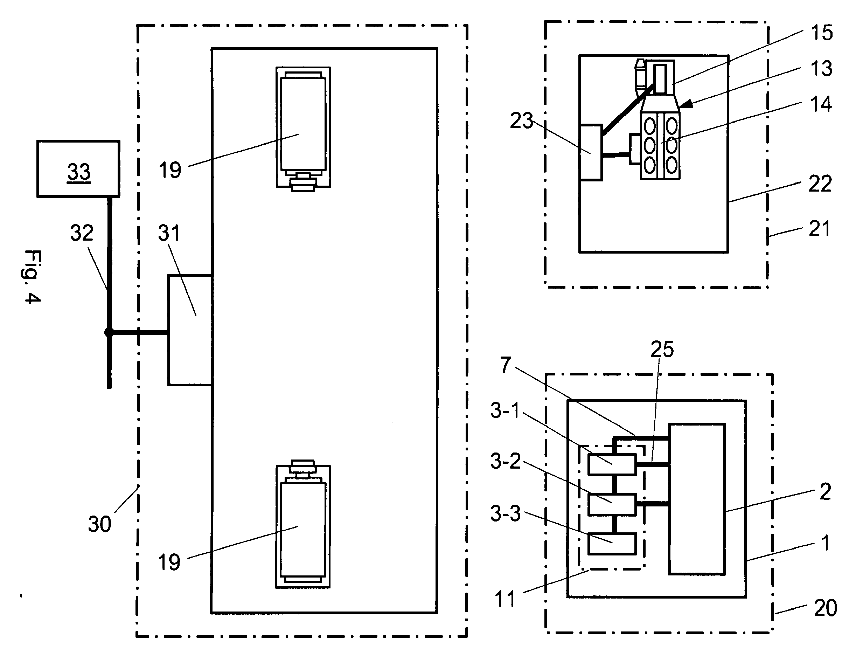

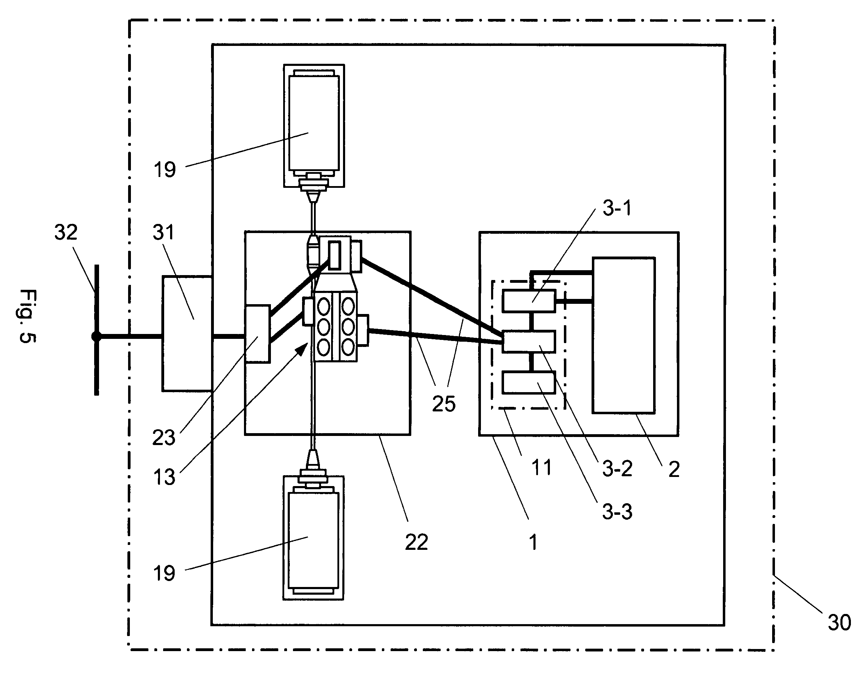

Ein Verfahren zum Rüsten eines Prüfstandes könnte dabei wie nachfolgend unter Hinweis auf die Figuren 4 und 5 beschrieben, ablaufen.

Am Prüfstand 30 sind vorerst nur die benötigten Antriebs- und Belastungsmaschinen 19 angeordnet. Weiters ist am Prüfstand 30 eine Prüfstandssteuereinheit 31 vorgesehen, die den Prüfablauf automatisiert und steuert. Die Prüfstandsteuereinheit 31 kann natürlich auch mit entsprechenden, hier nicht gezeigten Bedienschnittstellen und -hardware ausgestattet sein und kann auch (z.B. über ein Datennetzwerk 32) mit einer übergeordneten Steuereinheit 33, z.B. eines Prüffeldes verbunden sein. Auf einem Mechanik-Rüstplatz 21 kann der Prüfling 13, hier wieder ein Antriebsstrang aus Verbrennungsmotor 14 und Getriebe 15, mechanisch auf einer Transportpalette 22 aufgebaut und vorgerüstet werden, wie z.B. in der EP 1 484 591 A1 beschrieben. Dabei werden am Prüfling 13 auch benötigte Messgeräte und Sensoren angebracht, die mit einer Signalkonditionierungseinheit 23 verbunden werden.

Parallel dazu kann auf einem Steuergeräte-Rüstplatz 20 auf einer Steuergerätepalette 1 der benötigte Steuergeräteverbund 11 aufgebaut werden. Die einzelnen Steuergeräte 3 des Steuergeräteverbundes 11 werden dabei auch mit dem Simulationsrechner 2 und untereinander über einen Datenbus 7 verbunden. Nachdem alle benötigten Simulationsmodelle 4 am Simulationsrechner 2 geladen, parametrisiert und konfiguriert worden sind (was automatisiert ablaufen kann), kann ein Funktionstest der Steuergeräte 3 und/oder des Steuergeräteverbundes 11 erfolgen (was ebenfalls automatisiert ablaufen kann), um ein ordnungsgemäßes Funktionieren des Steuergeräteverbundes 11 sicherzustellen.

Danach werden wie in Fig. 5 dargestellt die vorgerüstete Transportpalette 22 und die vorgerüstete Steuergerätepalette 1 in den Prüfstand 30 gebracht. Die Steuergerätepalette 1 kann aber natürlich auch zuerst zur Transportpalette 22 gebracht werden und dort mit dem Prüfling 13 verbunden werden und danach kann die Transportpalette 22 mit der Steuergeräteplatte gemeinsam zum Prüfstand 30 gebracht werden. Am Prüfstand 30 wird der Prüfling 13 mit den Antriebs- und Belastungsmaschinen 19 verbunden, die Signalkonditionierungseinheit 23 wird mit der Prüfstandssteuereinheit 31 verbunden und die den physikalischen Systemen des Prüflings 13 zugeordneten Steuergeräte 3-2 werden mit dem Prüfling 13 verbunden. Dazu werden die Verbindungen zwischen den mit realen physikalischen Systemen zu verbindenden Steuergeräte 3-2 und dem Simulationsrechner 2 gelöst (was schon am Steuergeräte-Rüstplatz 20 erfolgen kann) und diese Steuergeräte 3-2 werden mit dem Kabelbaum 25 mit den zugehörigen physikalischen Systemen des Prüfling 13 verbunden. Die restlichen Steuergeräte 3-3 erhalten die für ihr Funktionieren benötigten Daten aus den zugehörigen Simulationsmodellen und stellen sicher, dass der Steuergeräteverbund 11 ordnungsgemäß funktioniert.

## Patentansprüche

1. Verfahren zum Vorrüsten eines Steuergeräteverbundes (11) aus einer Anzahl von einzelnen Steuergeräten (3) auf einem Steuergeräte-Rüstplatz (20), **dadurch gekennzeichnet, dass** der Steuergeräteverbund (11) am Steuergeräte-Rüstplatz (20) auf einer Steuergerätepalette (1) aufgebaut und die einzelnen Steuergeräte (3) untereinander verbunden werden und zumindest ein Steuergerät (3) zusätzlich mit einem auf der Steuergerätepalette (1) angeordneten Simulationsrechner (2) verbunden wird, wobei in den Simulationsrechner (2) Simulationsmodelle (4) zur Simulation von realen physikalischen Systemen geladen werden und zumindest das eine Steuergerät (3) Daten mit einem zugeordneten Simulationsmodell (4) austauscht.

2. Verfahren nach Anspruch 1, **dadurch gekennzeichnet, dass** die Funktion zumindest eines Steuergerätes (3) und/oder die Kommunikation zwischen zumindest zwei Steuergeräten (3) und/oder die Funktion des Steuergeräteverbundes (11) am Steuergeräte-Rüstplatz (20) getestet wird.

3. Verfahren nach Anspruch 1 oder 2, **dadurch gekennzeichnet, dass** ein Prüflauf und dafür benötigte weitere Simulationsmodelle (4) in den Simulationsrechner (2) geladen werden und der Prüflauf unter Einbindung des Steuergeräteverbundes (11) und der weiteren Simulationsmodelle (4) simuliert wird.

4. Verfahren zum Rüsten eines Prüfstandes (30) mit einem Prüfling (13), der zum ordnungsgemäßen Betrieb einen Steuergeräteverbund (11) aus einer Anzahl von Steuergeräten (3) benötigt, und einer Antriebs- und Belastungsmaschine (19), die mit dem Prüfling (13) verbunden wird, **dadurch gekennzeichnet, dass** der Steuergeräteverbund (11) in einem Steuergeräte-Rüstplatz (20) auf einer Steuergerätepalette (1) nach einem der Ansprüche 1 bis 3 vorgerüstet wird, anschließend die vorgerüstete Steuergerätepalette (1) zum Prüfling (13) gebracht wird und der Prüfling (13) mit zumindest einem zugehörigen Steuergerät (3) der Steuergerätepalette (1) verbunden wird, wobei die Verbindung dieses Steuergerätes (3) mit dem Simulationsrechner (2) gelöst wird.

5. Steuergerätepalette zur Aufnahme eines Steuergeräteverbundes (11) aus einer Anzahl von einzelnen Steuergeräten (3), **dadurch gekennzeichnet, dass** auf der Steuergerätepalette (1) der Steuergeräteverbund (11) aus den einzelnen Steuergeräten (3) aufbaubar ist, wobei die einzelnen Steuergeräte (3) untereinander verbunden sind und ein Simulationsrechner (2) vorgesehen ist, in den Simulationsmodelle (4) ladbar sind, wobei zumindest ein Steuergerät (3) zusätzlich mit dem Simulationsrechner (2) verbunden ist und über diese zusätzliche Verbindung Daten zwischen diesem Steuergerät (3) und einem zugeordneten Simulationsmodell (4) austauschbar sind.

6. Steuergerätepalette nach Anspruch 5, **dadurch gekennzeichnet, dass** am Simulationsrechner (2) eine Schnittstelle (6) vorgesehen ist, die mit einer Steuergeräteschnittstelle (5) des Steuergerätes (3) verbindbar ist.

7. Steuergerätepalette nach Anspruch 5 oder 6, **dadurch gekennzeichnet, dass** ein Steuergerät (3) als ein im Simulationsrechner (2) laufendes Steuergerätemodell implementiert ist.

## Claims

1. A method for preliminarily setting up a control unit group (11) from a number of individual control units (3) on a control unit setup station (20), **characterized in that** the control unit group (11) is assembled at the control unit setup station (20) on a control unit pallet (1) and the individual control units (3) are connected to each other, and at least one control unit (3) is additionally connected to a simulation computer (2) arranged on the control unit pallet (1), wherein simulation models (4) for simulating real physical systems are loaded into the simulation computer (2) and the at least one control unit (3) exchanges data with an allocated simulation model (4).

2. The method according to claim 1, **characterized in that** the function of at least one control unit (3) and/or the communication between at least two control units (3) and/or the function of the control unit group (11) is tested at the control unit setup station (20).

3. The method according to claim 1 or claim 2, **characterized in that** a test run and further simulation models (4) needed for this purpose are loaded into the simulation computer (2), and the test run is simulated with the involvement of the control unit group (11) and the further simulation models (4).

4. A method for setting up a test stand (30) with a unit under test (13) which, for proper operation, needs a control unit group (11) consisting of a number of control units (3), and with a dynamometer (19) which is connected to the unit under test (13), **characterized in that** the control unit group (11) is set up preliminarily in a control unit setup station (20) on a control unit pallet (1) according to any one of the claims 1 to 3, subsequently, the preliminarily set up control unit pallet (1) is brought to the unit under test (13), and the unit under test (13) is connected to at least one associated control unit (3) of the control unit pallet (1), wherein the connection of this control unit (3) to the simulation computer (2) is disconnected.

5. A control unit pallet for receiving a control unit group (11) from a number of individual control units (3), **characterized in that** on the control unit pallet (1), the control unit group (11) can be assembled from the individual control units (3), wherein the individual control units (3) are connected to each other, and a simulation computer (2) is provided into which simulation models (4) can be loaded, wherein at least one control unit (3) is additionally connected to the simulation computer (2), and data can be exchanged via this additional connection between this control unit (3) and an allocated simulation model (4).

6. The control unit pallet according to claim 5, **characterized in that** on the simulation computer (2) an interface (6) is provided that can be connected to a control unit interface (5) of the control unit (3).

7. The control unit pallet according to claim 5 or claim 6, **characterized in that** a control unit (3) is implemented as a control unit model running in the simulation computer (2).

## Revendications

1. Procédé de préparation préalable d'un groupe composite d'appareils de commande (11) à partir d'un nombre d'appareils de commande (3) individuels sur un poste de montage d'appareils de commande (20), **caractérisé par le fait que** le groupe composite d'appareils de commande (11) est construit sur une palette d'appareils de commande (1) au sein d'un poste de montage d'appareils de commande (20), **par le fait que** les différents appareils de commande (3) sont reliés entre eux et **par le fait qu'**au moins un appareil de commande (3) est en outre relié à un ordinateur de simulation (2) implanté sur la palette d'appareils de commande (1), des modèles de simulation (4) étant chargés sur l'ordinateur de simulation (2) afin de simuler des systèmes physiques réels et ledit au moins un appareil de commande (3) échangeant des données avec un modèle de simulation (4) associé.

2. Procédé selon la revendication 1, **caractérisé par le fait que** la fonction d'au moins un appareil de commande (3) et/ou la communication entre au moins deux appareils de commande (3) et/ou la fonction du groupe composite d'appareils de commande (11) sont testés sur le poste de montage d'appareils de commande (20).

3. Procédé selon l'une des revendications 1 ou 2, **caractérisé par le fait qu'**une séquence d'essai et d'autres modèles de simulation (4) nécessaires à cette fin sont chargés sur l'ordinateur de simulation (2) et **par le fait que** la séquence d'essai est simulée en faisant intervenir le groupe composite d'appareils de commande (11) et les autres modèles de simulation (4).

4. Procédé de préparation d'un banc d'essai (30) avec une éprouvette (13) qui, pour fonctionner correctement, a besoin d'un groupe composite d'appareils de commande (11) fait d'un nombre d'appareils de commande (3) et avec une machine d'entraînement et de sollicitation (19) qui est reliée à l'éprouvette (13), **caractérisé par le fait que** le groupe composite d'appareils de commande (11) est préparé préalablement sur une palette d'appareils de commande (1) selon l'une des revendications 1 à 3 , au sein d'un poste de montage d'appareils de commande (20), après quoi la palette d'appareils de commande (1) préparée est amenée à l'éprouvette (13) et l'éprouvette (13) est reliée à au moins un appareil de commande (3) correspondant de la palette d'appareils de commande (1), la liaison de cet appareil de commande (3) avec l'ordinateur de simulation (2) étant alors coupée.

5. Palette d'appareils de commande destinée à recevoir un groupe composite d'appareils de commande (11) fait d'un nombre d'appareils de commande (3) individuels, **caractérisée par le fait que** le groupe composite d'appareils de commande (11) est apte à être construit sur la palette d'appareils de commande (1) à partir des appareils de commande (3) individuels, les différents appareils de commande (3) étant reliés entre eux et un ordinateur de simulation (2) étant prévu dans lequel peuvent être chargés des modèles de simulation (4), au moins un appareil de commande (3) étant en outre relié à l'ordinateur de simulation (2) et des données pouvant être échangées par cette liaison supplémentaire entre cet appareil de commande (3) et un modèle de simulation (4) correspondant.

6. Palette d'appareils de commande selon la revendication 5, **caractérisée par le fait qu'**il est prévu sur l'ordinateur de simulation (2) une interface (6) qui peut être reliée à une interface d'appareil de commande (5) de l'appareil de commande (3).

7. Palette d'appareils de commande selon l'une des revendications 5 ou 6, **caractérisée par le fait qu'**un appareil de commande (3) est mis en oeuvre sous la forme d'un modèle d'appareil de commande s'exécutant sur l'ordinateur de simulation (2).
